# EUROPÄISCHE PATENTSCHRIFT

(11) **EP 1 740 416 B1**
(45) Veröffentlichungstag und Bekanntmachung des Hinweises auf die Patenterteilung: **18.11.2009**
(21) Anmeldenummer: 05729620.4
(22) Anmeldetag: 15.04.2005
(51) Int. Cl.: B60R 11/02

(54) **HALTEVORRICHTUNG ZUR AUFNAHME EINES MOBILEN ENDGERÄTES/BILDSCHIRMES**
HOLDING DEVICE FOR ACCOMMODATING A MOBILE TERMINAL/SCREEN
DISPOSITIF DE SUPPORT CONÇU POUR SUPPORTER UN TERMINAL MOBILE/ECRAN D'AFFICHAGE

(30) Priorität: 16.04.2004 DE 102004019188
(43) Veröffentlichungstag der Anmeldung: 10.01.2007
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2005/051668
(87) Internationale Veröffentlichungsnummer: WO 2005/100094

(56) Entgegenhaltungen:
- US-A1- 2001 042 812
- US-A1- 2003 089 832
- US-B1- 6 381 133

## Beschreibung

Da heutzutage eine Wartung von Anlagen wie beispielsweise Windenergieanlagen kaum noch ohne mobile Geräte, insbesondere Datenverarbeitungsgeräte, wie beispielsweise Notebooks, Laptops, Palmtops oder dergleichen möglich ist, taucht das Problem einer adäquaten Halterung für derartige mobile Geräte auf. Da Wartungs- und Instandhaltungsarbeiten nicht nur bei gutem Wetter durchgeführt werden müssen, ist es wünschenswert, die für die Wartung benötigten mobilen Geräte innerhalb eines Fahrzeuges für die Dauer der Wartung anzubringen.

US 2001/042812 A1 zeigt eine Aufnahmevorrichtung für ein mobiles Gerät zur Montage an einem Armaturenbrett eines Fahrzeuges. Ein Ende der Aufnahmevorrichtung wird mittels Schrauben an einem Aschenbecher eines Fahrzeugs befestigt.

US 2003/089832 A1 zeigt eine Aufnahmevorrichtung für ein mobiles Gerät, wobei die Aufnahmevorrichtung auf einem Armaturenbrett abgestellt wird.

US 6,381,133 B1 zeigt eine Aufnahmevorrichtung für ein mobiles Gerät, wobei ein Ende der Aufnahmevorrichtung mittels Schrauben dauerhaft an dem Armaturenbrett befestigt wird.

Die Gattungsbildende CA 2,006,979 zeigt eine Befestigungsklammer zum Befestigen eines tragbaren Telefons in Kraftfahrzeugen.

Es ist somit Aufgabe der vorliegenden Erfindung, eine Haltevorrichtung für mobile Geräte vorzusehen, welche es ermöglicht, mobile Geräte im Inneren eines Fahrzeuges auf einfache Weise anzubringen.

Diese Aufgabe wird durch eine Haltevorrichtung gemäß Anspruch 1 gelöst.

Gemäß einer Ausführung der vorliegenden Erfindung ist der erste Abschnitt des mindestens einen Halters dazu geeignet, in vorhandene Öffnungen in den beifahrerseitigen Armaturen im beifahrerseitigen Bereich der Konsole eines Fahrzeuges eingesteckt bzw. eingesetzt zu werden.

Gemäß der Erfindung weist der Halter eine erste und eine zweite Seite auf, wobei am zweiten Abschnitt des Halters eine Kante ausgebildet ist, welche zur ersten Seite hin geneigt ist. Somit kann ein mobiles Gerät auf der ersten Seite des mindestens einen Halters abgelegt werden, wobei das Gerät durch die Kante daran gehindert wird, von dem Halter zu rutschen.

Gemäß einer weiteren Ausgestaltung der Erfindung ist zwischen den zweiten Seiten des ersten und zweiten Abschnittes des mindestens einen Halters ein Winkel von kleiner als 180° eingeschlossen. Somit kann ein mobiles Gerät in einer ergonomisch günstigen Position bedient werden.

Weitere Ausgestaltungen der Erfindung sind Gegenstand der Unteransprüche.

Nachfolgend wird die Erfindung anhand der Zeichnung detailliert beschrieben.
- Fig. 1: zeigt eine Seitenansicht eines Halters gemäß einem Ausführungsbeispiel,
- Fig. 2: zeigt eine Draufsicht eines Halters von Figur 1,
- Fig. 3 bis 8: zeigen jeweils Halter gemäß Figur 1 oder 2 welche in einem Armaturenbrett befestigt sind.

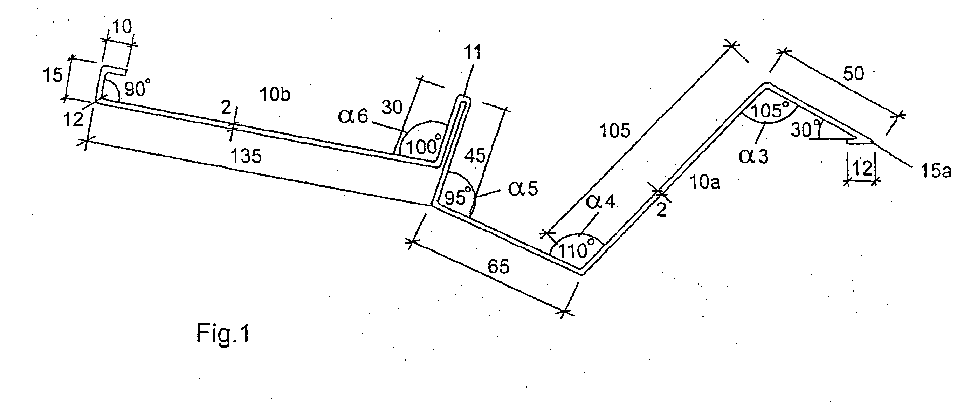

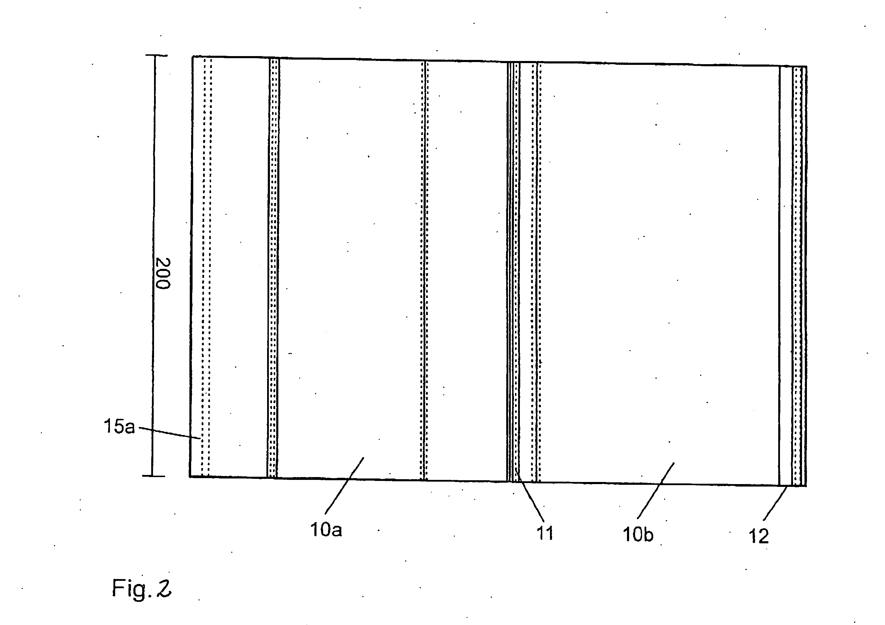

In den Figuren 1 und 2 ist eine Seitenansicht und eine Draufsicht eines Halters gemäß der Erfindung gezeigt. Der Halter weist einen Haken 15a auf. Ferner ist ein Haken 12 an einem zweiten Abschnitt 10b des Halters angebracht. Der Halter weist ebenfalls einen ersten und einen zweiten Abschnitt 10a, 10b auf. Zwischen dem ersten und zweiten Abschnitt 10a, 10b ist eine Nase 11 vorgesehen. Im Gegensatz zu dem Halter gemäß dem zweiten Ausführungsbeispiel weist der erste Abschnitt 10a einen weiteren Knick auf, wodurch der Halter besser an bzw. in dem Armaturenbrett eines Fahrzeugs eingehakt werden kann.

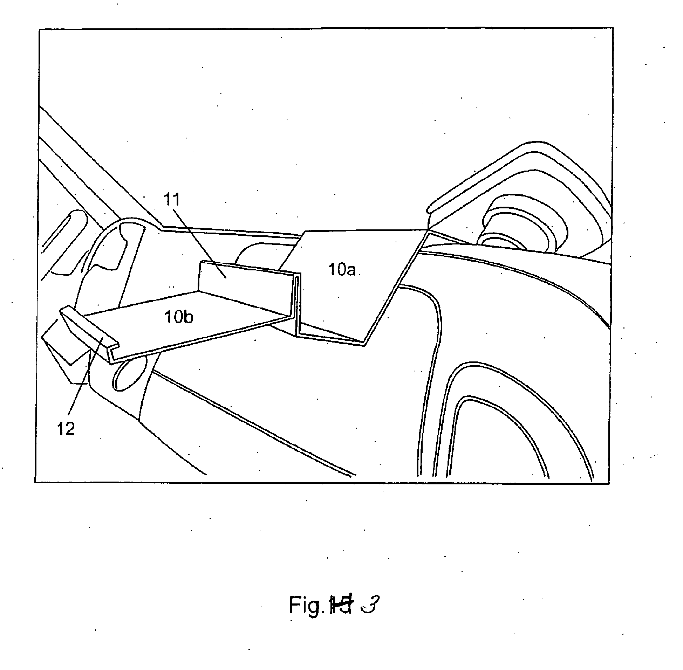

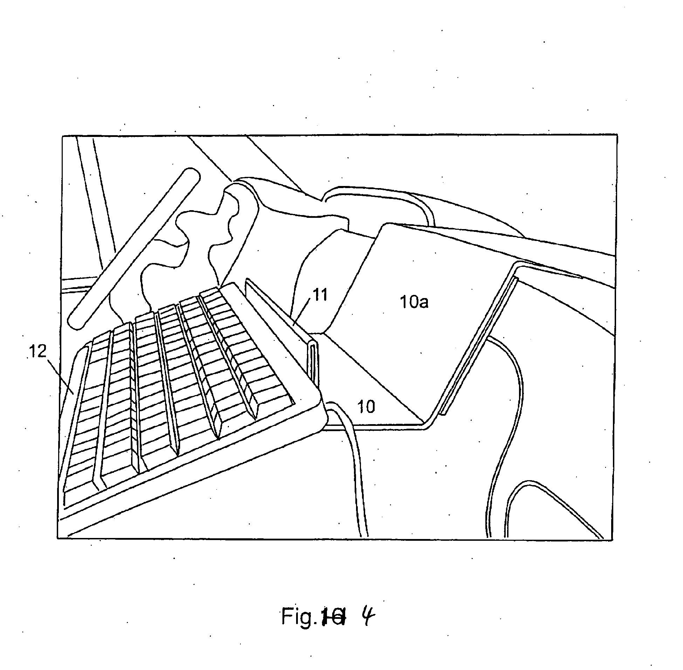

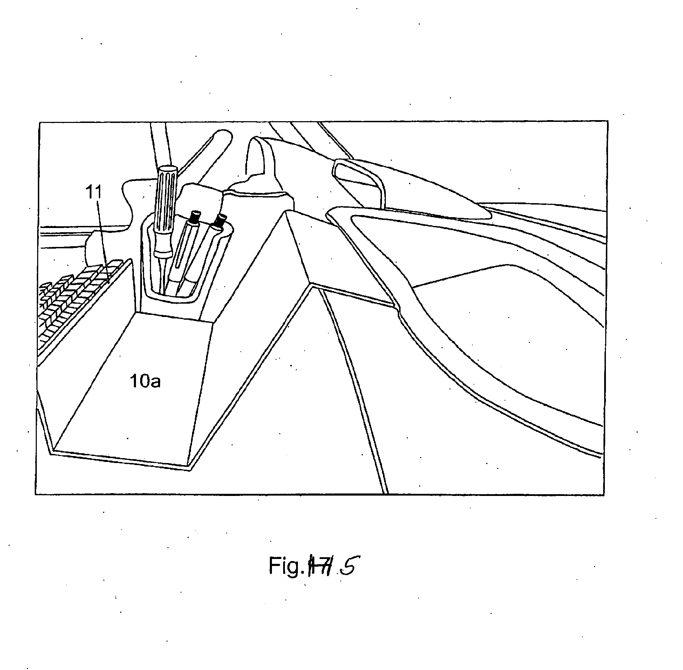

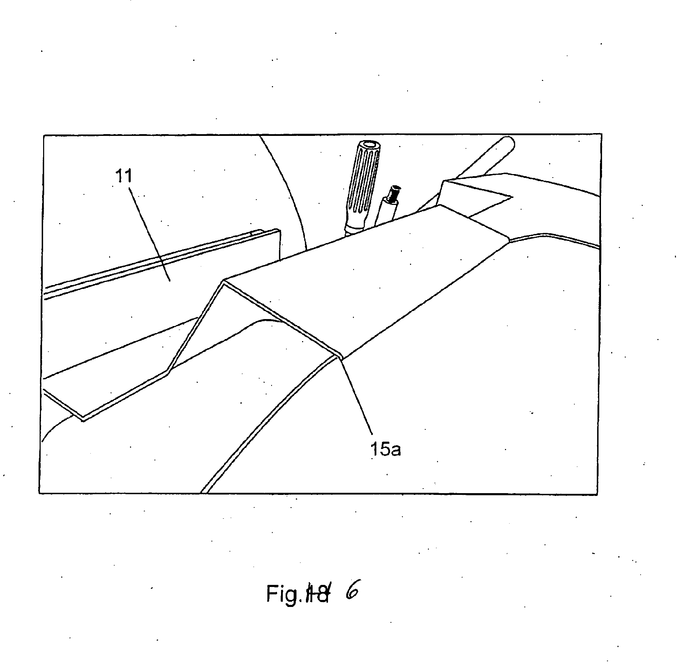

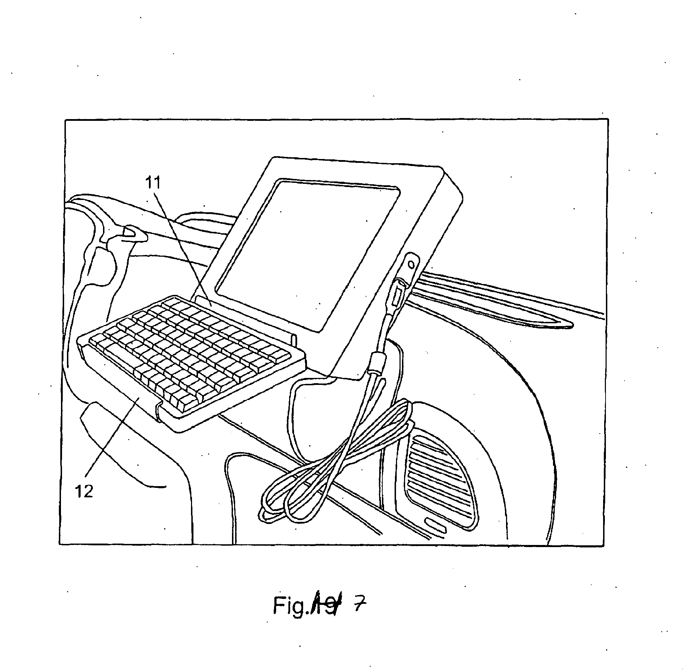

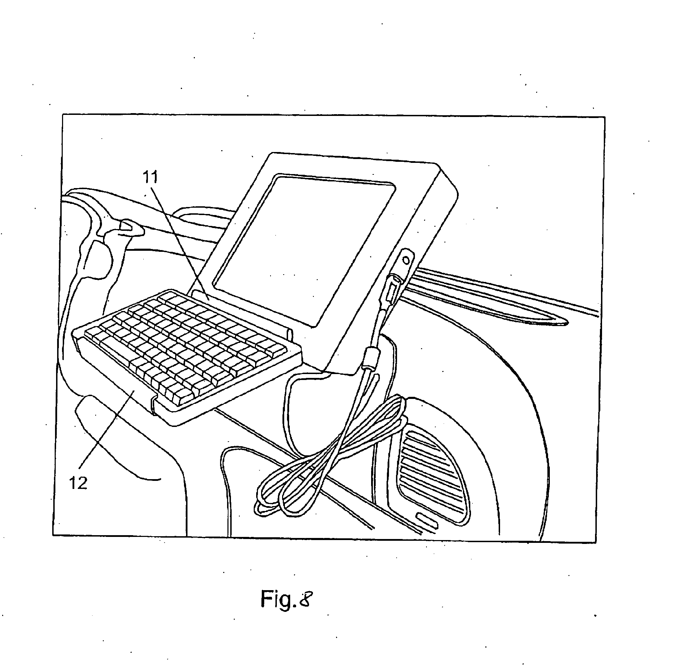

Figur 3 zeigt den Halter 10, welcher an einem Armaturenbrett 20 auf der Beifahrerseite eines Fahrzeugs angebracht bzw. eingehakt ist. In Figur 4 ist zusätzlich eine Tastatur gezeigt, welche zwischen dem Haken 12 und der Nase 11 angebracht ist. Figur 5 und 6 zeigen weitere Details, wie der Halter 10 durch den Haken 15a an dem Armaturenbrett eines Fahrzeugs befestigt bzw. eingehakt ist. In Figur 7 und 8 ist der an dem Armaturenbrett 20 eines Fahrzeugs befestigte Halter mit einer Tastatur und einem Bildschirm gezeigt.

Somit wird eine einfache und preiswerte Möglichkeit vorgesehen, mobile Endgeräte/Bildschirme beispielsweise für Wartungsarbeiten im Inneren eines Servicefahrzeuges anzubringen und nach Beendigung der Wartungsarbeiten entsprechend schnell und einfach abzumontieren.

## Patentansprüche

1. Abnehmbare Haltevorrichtung zur Aufnahme eines mobilen Gerätes, insbesondere eines Datenverarbeitungsgerätes, und/oder eines Bildschirmes im Fahrgastbereich eines Fahrzeuges, mit
mindestens einem Halter mit einem ersten Abschnitt (10a) zum Einsetzen in/an einem Armaturenbrett eines Fahrzeuges und einem zweiten Abschnitt (10b) zur Aufnahme des mobilen Gerätes und/oder des Bildschirmes, wobei am ersten Abschnitt (10a) mindestens ein Haken (15a) zum Befestigen der Haltvorrichtung im beifahrerseitigen Bereich der Konsole eines Fahrzeugs vorhanden ist und
wobei der Halter (10) eine erste und zweite Seite aufweist, **dadurch gekennzeichnet, daß** am zweiten Abschnitt des mindestens einen Halters (10) eine zur ersten Seite hin geneigte Kante (12) ausgebildet ist,
um ein auf der ersten Seite abgelegtes mobiles Gerät davon zu hindern, vom Halter zu rutschen.

2. Haltevorrichtung nach Anspruch 1, wobei der erste Abschnitt des mindestens einen Halters dazu geeignet ist, in vorhandene Öffnungen im beifahrerseitigen Bereich der Konsole eines Fahrzeuges eingesetzt zu werden.

3. Haltevorrichtung nach einem der vorherigen Ansprüche, wobei auf der ersten Seite des mindestens einen Halters beabstandet zum ersten Abschnitt eine Nase (11) ausgebildet ist.

4. Haltevorrichtung nach einem der vorherigen Ansprüche, wobei zwischen den zweiten Seiten des ersten und zweiten Abschnittes (10a, 10b) ein Winkel (α) von kleiner 180° eingeschlossen ist.

5. Fahrzeug mit einer abnehmbaren Haltevorrichtung nach einem der Ansprüche 1 bis 4.

## Claims

1. Detachable holding device for receiving a mobile device, especially a data-processing device, and/or a display screen in the passenger area of a vehicle, comprising
at least one holder having a first portion (10a) for insertion into/onto a dashboard of a vehicle and a second portion (10b) for receiving the mobile device and/or the display screen, wherein at least one hook (15a) is present on the first portion (10a) for attaching the holding device in the passenger-side region of the console of a vehicle and wherein the holder (10) has a first and second side,
**characterized in that** an edge (12) inclined towards the first side is formed on the second portion of the at least one holder (10) to prevent a mobile device placed on the first side from slipping off the holder.

2. Holding device according to claim 1, wherein the first portion of the at least one holder is adapted to being inserted into existing openings in the passenger-side region of the console of a vehicle.

3. Holding device according to either of the preceding claims, wherein a nose (11) is formed on the first side of the at least one holder, at a distance from the first portion.

4. Holding device according to any one of the preceding claims, wherein an angle (α) of less than 180° is included between the second sides of the first and second portions (10a, 10b).

5. Vehicle having a detachable holding device according to any one of claims 1 to 4.

## Revendications

1. Dispositif de support amovible pour le logement d'un appareil mobile, en particulier d'un appareil de traitement de données et/ou d'un écran dans la zone habitacle d'un véhicule, comprenant
au moins un support avec une première partie (10a) à insérer dans/sur un tableau de bord d'un véhicule et une seconde partie (10b) pour le logement de l'appareil mobile et/ou de l'écran,
au moins un crochet (15a) étant présent sur la première partie (10a) pour la fixation du dispositif de support dans la zone côté passager avant de la console d'un véhicule et le support (10) présentant un premier et un second côté,
**caractérisé en ce qu'**une arête (12) inclinée en direction du premier côté est réalisée sur la seconde partie du au moins un support (10), afin d'empêcher un appareil mobile déposé sur le premier côté de glisser du support.

2. Dispositif de support selon la revendication 1, la première partie du au moins un support étant appropriée pour être insérée dans des ouvertures présentes dans la zone côté passager avant de la console d'un véhicule.

3. Dispositif de support selon l'une quelconque des revendications précédentes, un ergot (11) étant réalisé sur le premier côté du au moins un support à distance de la première partie.

4. Dispositif de support selon l'une quelconque des revendications précédentes, un angle (α) inférieur à 180° étant formé entre les seconds côtés de la première et de la seconde partie (10a, 10b).

5. Véhicule présentant un dispositif de support selon l'une quelconque des revendications 1 à 4.
